# EUROPEAN PATENT SPECIFICATION

(11) **EP 3 683 433 B1**
(45) Date of publication and mention of the grant of the patent: **30.11.2022**
(21) Application number: 19188529.2
(22) Date of filing: 26.07.2019
(51) Int. Cl.: F02M 26/10, F02M 26/70, F02M 26/71

(54) **EGR VALVE FOR VEHICLE**
EGR-VENTIL FÜR FAHRZEUG
SOUPAPE RGE POUR VÉHICULE

(30) Priority: 18.01.2019 KR 20190006602
(43) Date of publication of application: 22.07.2020
(73) Proprietor: Kamtec, Inc., Chungcheongbuk-do 27818 (KR)
(72) Inventor: KIM, Sung Kun, 18449 Hwaseong-si, Gyeonggi-do (KR); KOO, Jung Suek, 18449 Hwaseong-si, Gyeonggi-do (KR); KIM, Seung Yong, 18449 Hwaseong-si, Gyeonggi-do (KR); SEO, Chang Ho, 18449 Hwaseong-si, Gyeonggi-do (KR)
(74) Representative: M. Zardi & Co S.A.

(56) References cited:
- EP-A1- 1 002 947
- EP-A1- 2 728 156
- EP-A1- 2 865 880
- DE-A1-102015 106 888
- JP-A- S5 587 848
- JP-A- 2002 317 658
- US-A1- 2005 241 702
- US-A1- 2013 025 576
- US-B1- 6 216 737

## Description

### BACKGROUND OF THE INVENTION

### Field of the Invention

The present invention relates to an exhaust gas recirculation (EGR) valve for a vehicle, and more particularly, to an EGR valve for a vehicle, for easily controlling a valve that is in charge of opening and closing of an EGR flow passage and for more precisely controlling flow of EGR gas when the valve is initially open.

### Discussion of the Related Art

In general, a method that has been the most popular thus far to prevent generation of nitrogen oxide (NOₓ) from exhaust gas discharged from an engine installed in a vehicle has used an exhaust gas recirculation (EGR) valve for partially adding cooled exhaust gas to a mixer and inhaling the gas into a cylinder.

As disclosed in Korean Patent Publication No. 10-1338272, an EGR valve includes a fresh air flow passage into which outside fresh air is introduced, and an EGR flow passage in which exhaust gas discharged from an engine returns and is guided to be re-introduced to the engine.

Here, a fresh air control valve is provided in the fresh air flow passage, and an EGR control valve is provided in the EGR flow passage.

The EGR control valve and the fresh air control valve are operatively associated with each other by a power transfer device such as a gear and an actuator connected thereto rather than being separately moved.

According to the above conventional art, when the EGR valve is completely closed, the fresh air control valve is positioned in parallel to a flow direction of fresh air, and thus interference in introduction of fresh air is minimized and fresh air is capable of being introduced into the engine while being maintained in a maximum inflow rate.

When the EGR valve is open by a predetermined degree to re-introduce exhaust gas into the engine, while the fresh air control valve is simultaneously moved, a predetermined portion of a cross section of the fresh air flow passage is blocked, and accordingly, the EGR valve reduces the amount of fresh air introduced per hour.

When the EGR valve is completely open, the fresh air control valve is closed by a maximum degree, and thus the EGR valve further reduces the amount of fresh air introduced into the engine.

However, in the conventional art, when a valve for opening and closing the EGR flow passage is provided in the form of a pivot valve and pressure of EGR gas is applied to the valve, force is intensively applied in a direction in which the valve is open, and thus there is a problem in that output of a motor needs to be increased to withstand the force and to maintain a closed state, and also there is a problem in that a large amount of EGR gas is introduced when the valve is initially open and it is difficult to precisely control EGR gas when the valve is initially open. US 2013/025576 A1 discloses a product comprising a valve housing constructed and arranged to have a first fluid port, a second fluid port, and a third fluid port secured therein; a first valve disposed in one of the first fluid port, second fluid port or third fluid port and constructed and arranged to block or control flow of fluid there through, the first valve having a first face; a valve actuator shaft extending into one of the first fluid port, second fluid port, or third fluid port and operatively connected to the first valve; a second valve connected to the first valve by a stem portion different from the shaft, the second valve having a first face being constructed and arranged to be rotatable with the first valve and the valve shaft so that the shaft is rotatable to move the first valve between closed and open positions.

### SUMMARY OF THE INVENTION

An object of the present invention is to provide an exhaust gas recirculation (EGR) valve for a vehicle, for easily controlling a valve that is in charge of opening and closing of an EGR flow passage and for more precisely controlling flow of EGR gas when the valve is initially open.

According to an aspect of the present invention, an exhaust gas recirculation (EGR) for a vehicle includes a fresh air flow passage, a fresh air flow passage; an EGR flow passage connected to the fresh air flow passage; a valve unit configured to open or close the EGR flow passage and to selectively block a portion of the fresh air flow passage according to an opened or closed state of the EGR flow passage, wherein the valve unit includes: a first valve configured to open or close the EGR flow passage; and a second valve disposed at one side of the first valve and disposed at a different angle from the first valve, the second valve provided to selectively interfere or not interfere with fluid flow of fresh air in the fresh air flow passage while being moved with the first valve, wherein the first valve is provided in the form of a butterfly valve with respect to the EGR flow passage, wherein the exhaust gas recirculation for a vehicle comprise: a rotation axle disposed on a central portion of the EGR flow passage, wherein the first valve and second valve are fixed to the rotation axle such that the first valve and the second valve are adapted to move simultaneously as the rotation axle rotates, and characterized in that the second valve is disposed to be perpendicular or inclined with respect to a proceeding direction of the fresh air flow passage; and wherein the rotation axle is arranged in parallel to the proceeding direction of the fresh air flow passage.

The EGR valve for a vehicle may further include a rotation axle disposed on a central portion of the EGR flow passage, wherein the rotation axle is disposed on a central portion of the first valve.

When the first valve completely closes the EGR flow passage, the first valve may be inclined with respect to a longitudinal direction of the EGR flow passage.

The rotation axle may include an accommodation groove on which the first valve is fixedly accommodated, the first valve may be disposed on the accommodation groove, and an extension connecting the first valve and the second valve is fixed to the first valve and the rotation axle.

The second valve may be disposed to be perpendicular or inclined with respect to a proceeding direction of the fresh air flow passage, and the extension may be bent at an end of the second valve and extends in a different direction of an extension direction of the second valve.

The second valve may have an area that is widened in an opposite direction to a position adjacent to the first valve and may have a rounded endmost portion.

A first guide surface may be provided in an inclined form between the fresh air flow passage and the EGR flow passage, a second guide surface may be provided at an opposite side to the first guide surface in a longitudinal direction of the EGR flow passage, and a height to an upper end of the second guide surface may be higher than a height to a lower end of the first guide surface.

The EGR valve for a vehicle may further include an insertion groove that is formed to penetrate an outer circumference of the rotation axle and into which the first valve is inserted, and an accommodation groove that is formed to be stepped by exploding or removing a portion of the outer circumference of the rotation axle and on which an extension of the second valve is disposed, wherein a first insertion hole may be formed in the first valve, wherein a second insertion hole may be formed in the extension of the second valve, wherein a third insertion hole may be formed in the rotation axis, and wherein a coupling member may be inserted into the second insertion hole, the third insertion hole, and the first insertion hole, sequentially, and may fix the first and second valves and the rotation axis.

The second valve may further include a strength reinforcement portion configured to reinforce a bent portion between an extension and a valve body portion.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
FIG. is a perspective view of an exhaust gas recirculation (EGR) valve for a vehicle according to the present invention;
FIG. 2 is an exploded perspective view of an EGR valve for a vehicle according to the present invention;
FIG. 3 is a perspective view of a valve unit used in an EGR valve for a vehicle according to the present invention;
FIGS. 4A and 4B are an exploded perspective view and a coupled perspective view of a valve unit used in an EGR valve for a vehicle according to the present invention;
FIG. 5A is a side cross-sectional view of a conventional EGR valve;
FIG. 5B is a side cross-sectional view of an EGR valve according to the present invention;
FIG. 6A is a partial enlarged plan view of an EGR valve according to a second embodiment of the present invention;
FIG. 6B is a partial enlarged side cross-sectional view of an EGR valve according to a second embodiment of the present invention;
FIG. 7 illustrates a state in which an EGR flow passage is closed and a fresh air flow passage is not interfered with a valve unit in an EGR valve for a vehicle according to the present invention;
FIG. 8 illustrates a state in which an EGR flow passage is partially open and a fresh air flow passage is not interfered with a valve unit in an EGR valve for a vehicle according to the present invention;
FIG. 9 illustrates a state in which an EGR flow passage is completely open and a fresh air flow passage is interfered with a valve unit in an EGR valve for a vehicle according to the present invention; and
FIG. 10 is a graph of a state in which EGR gas is introduced according to an operational state of a valve in an EGR valve for a vehicle according to the present invention and a conventional EGR valve.

### DETAILED DESCRIPTION OF THE INVENTION

As the present invention allows for various changes and numerous embodiments, particular embodiments will be illustrated in the drawings and described in detail in the written description.

However, this is not intended to limit the present invention to particular modes of practice, and it is to be appreciated that all changes, equivalents, and substitutes that do not depart from the scope of the present invention as defined in the appended claims are encompassed in the present invention.

The terms such as "first" and "second" are used herein merely to describe a variety of constituent elements, but the constituent elements are not limited by the terms.

The terms are used only for the purpose of distinguishing one constituent element from another constituent element.

For example, a first element may be termed a second element and a second element may be termed a first element without departing from the teachings of the present invention.

As used herein, the term "and/or" includes any and all combinations of one or more of the associated listed items.

It will be understood that when an element, such as a layer, a region, or a substrate, is referred to as being "on", "connected to" or "coupled to" another element, it may be directly on, connected or coupled to the other element or intervening elements may be present.

In contrast, when an element is referred to as being "directly on," "directly connected to" or "directly coupled to" another element or layer, there are no intervening elements or layers present.

The terms used herein is for the purpose of describing particular embodiments only and is not intended to be limiting of the present invention.

The singular forms "a," "an" and "the" are intended to include the plural forms as well, unless the context clearly indicates otherwise.

It will be further understood that the terms "comprises" or "comprising" when used in this specification, specify the presence of stated features, integers, steps, operations, elements, or components, but do not preclude the presence or addition of one or more other features, integers, steps, operations, elements, components, or groups thereof.

Hereinafter, the present invention will be described in detail by explaining exemplary embodiments of the invention with reference to the attached drawings. The same reference numerals in the drawings denote like elements, and a repeated explanation thereof will not be given.

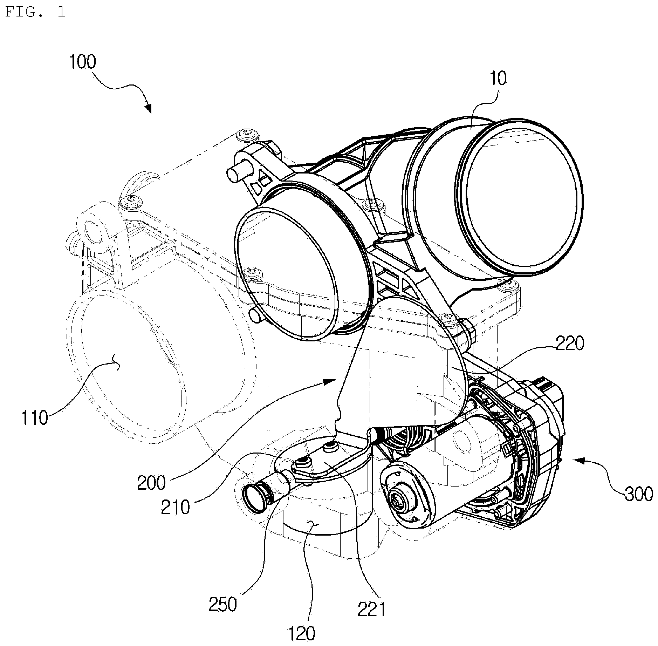

As shown in FIG. 1, an exhaust gas recirculation (EGR) valve 100 for a vehicle according to the present invention may include that forms an outer appearance thereof, and a fresh air flow passage 110 configured in the form of a tube in which fresh air flows may be provided in the housing 101, and an EGR flow passage 120 may be provided next to the fresh air flow passage 110.

A fresh air guide tube 10 may be provided in the housing 101 to guide outside fresh air to the fresh air flow passage 110.

A guide space 130 configured to guide exhaust gas discharged from the EGR flow passage 120 to the fresh air flow passage 110 may be provided between the EGR flow passage 120 and the fresh air flow passage 110, and the guide space 130 may function as a type of a buffer chamber.

A valve unit 200 configured to selectively open and close the EGR flow passage 120 and, simultaneously, to intervene in an internal space of the fresh air flow passage 110 to adjust an inflow rate and fluid flow of fresh air may be provided in the guide space 130.

Although described below, the valve unit 200 may include a first valve 210 that functions as an EGR valve configured to open or close the EGR flow passage 120 or to adjust an opening angle, and a second valve 220 that functions as a fresh air control valve configured to be operatively associated and simultaneously operated with the first valve 210 and to intervene in flow of fresh air in the fresh air flow passage 110 to selectively adjust fluid flow.

The first valve 210 and the second valve 220 may be disposed at different angles because fluid flow of exhaust gas transmitted through the EGR flow passage 120 and fluid flow of fresh air flowing in the fresh air flow passage 110 are perpendicular to each other or are positioned at different angles.

The valve unit 200 may be provided at a rotation axis 250 and may be moved by rotational motion of the rotation axis 250, and in this regard, when the rotational motion proceeds, both the first valve 210 and the second valve 220 may be simultaneously moved.

The rotation axis 250 may be connected to a driver 300 provided at one side of the housing 101, and the driver 300 may provide and transfer power, and thus the valve unit 200 may simultaneously adjust an inflow rate of exhaust gas introduced through the EGR flow passage 120 and an inflow rate of fresh air in the fresh air flow passage 110 while performing rotational motion.

Both the first valve 210 and the second valve 220 may be fixed to the rotation axis 250, and in detail, portions of the first valve 210 and the second valve 220 may be simultaneously coupled to the rotation axis 250 via a plurality of coupling members.

To this end, a portion of the second valve 220 may extend in a state in which the second valve 220 is bent and may be disposed above or below the first valve 210, and the extending portion and the first valve 210 may be coupled to the rotation axis 250 via a coupling member. However, the arrangement relationship between the first valve 210 and the second valve 220 is not limited thereto, and as described below, the first valve 210 may be inserted into the rotation axis 250, and the bent portion of the second valve 220 may be installed on an external surface of the rotation axis 250.

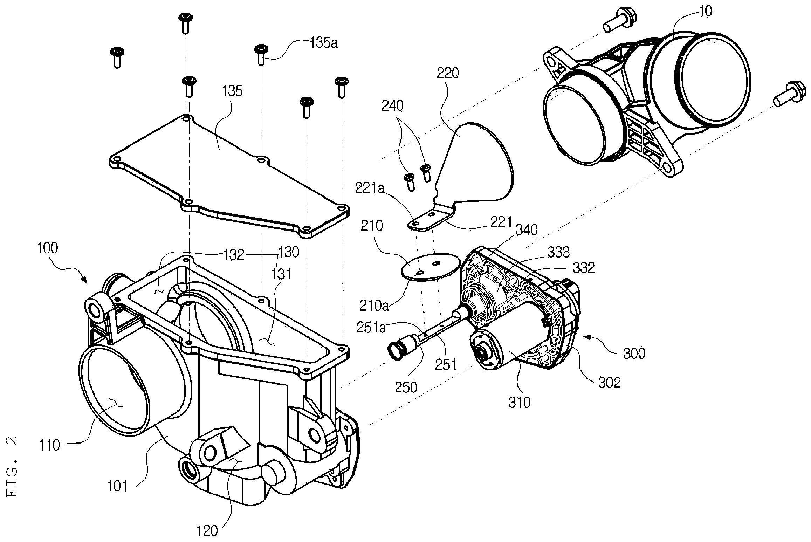

As shown in FIG. 2, the driver 300 may include a motor 310, a pinion gear (not shown) installed at a motor axis, and a gear module (not shown) provided between the pinion gear (not shown) and the rotation axis.

The gear module may be configured in a multilayered form, and may include a first gear (not shown) engaged with the pinion gear 320, a second gear 332 engaged with the first gear (not shown) and configured in a multilayered form, and a third gear 333 engaged with the second gear 332 and configured in the form of a fan to which the rotation axis 250 is fixedly inserted.

The driver 300 may further include a driver cover 302 configured to prevent the motor 310 and the gear module 330 from being exposed to the outside.

The rotation axis 250 may be coupled to the third gear 333, and a return spring 340 configured in the form of a coil spring, which causes a closed state of the second valve 220 when the driver is turned off, may be provided around the rotation axis 250.

An accommodation groove 251 configured in a recessed form may be provided in the rotation axis 250, and the first valve 210 may be inserted and installed into the accommodation groove 251. An extension 221 formed by bending and extending a portion of the second valve 220 in a longitudinal direction of the rotation axis 250 may be provided at the first valve 210, and a second insertion hole 221a into which a coupling member 240 is inserted may be provided in the extension 221.

A first insertion hole 210a into which the coupling member 240 is inserted may also be provided in a central portion of the first valve 210, and the first and second insertion holes 210a and 221a may be aligned with third insertion holes 251a provided on the accommodation groove 251 of the rotation axis 250.

Accordingly, the coupling member 240 may be inserted into the first, second, and third insertion holes 210a, 221a, and 251a, sequentially, and the rotation axis 250, the first valve 210, and the second valve 220 may be integrally configured as the valve unit 200.

Accordingly, the first valve 210 and the second valve 220 may be simultaneously moved according to rotation of the rotation axis 250.

The center of the first valve 210 is installed at the rotation axis 250, and thus the first valve 210 and the rotation axis 250 may be configured in the form of a butterfly valve. The conventional art and the present invention are different from each other in that the conventional art uses a pivot valve manner in which the center of rotation of a first valve is positioned outside a valve plate but the present invention corresponds to a butterfly valve manner in which the center of the first valve is positioned within a region of a valve plate.

The second valve 220 may be designed in consideration of a shape of the fresh air flow passage 110 because fresh air is introduced in a side direction of a flow direction and intervenes in fluid flow.

A cross section of the valve plate of the second valve 220 may be formed in such a way that the width of the valve plate is widened from the extension 221 towards an opposite side thereto and then is narrowed again and may be configured in the form of a water drop or a fan.

This may be designed to effectively block a cross section of the fresh air flow passage provided in the form of a circle.

A direction in which opposite surfaces of the first valve 210 are disposed and a direction in which opposite surfaces of the second valve 220 may be perpendicular to each other or may be disposed at different angles because a flow direction of exhaust gas and a flow direction of fresh air are different from each other, as described above.

It may be seen that the first valve 210 is configured in a butterfly valve type with respect to the EGR flow passage 120, and the second valve 220 is configured in a slide valve type with respect to the fresh air flow passage 110.

As described above, the guide space 130 may be provided between the EGR flow passage 120 and the fresh air flow passage 110, and the valve unit 200 may be rotatably installed inside the guide space 130.

A cross section of the guide space 130 may be increased towards the fresh air flow passage 110 from the EGR flow passage in order to effectively transfer EGR gas.

The guide space 130 may be divided into a first region 131 corresponding to the EGR flow passage 120 and a second region 132 corresponding to the fresh air flow passage 110, and the first region 131 and the second region 132 may be connected to each other.

A cross section of the first region 131 may be increased towards the second region 132, and a cross section of the second region 132 may be formed constant.

A cover 132 may be provided on the guide space 130 to cover the guide space 130, and cover 132 and the housing 101 may be coupled to each other by a separate coupling member 132a.

When the second valve 220 is rotated and moved in a direction towards the fresh air flow passage 110, the second valve 220 may be present in the first region 131, and then may be moved to the second region 132, and thus the second valve 220 may intervene in flow of fresh air in the fresh air flow passage 110 while being moved inside the fresh air flow passage 110.

The second valve 220 may have a rotation trajectory corresponding to a rotation direction of the rotation axis 250 via the driver 300, and in this case, a driving method of the second valve 220 may use a type of slide moving method in which the fresh air flow passage 110 is hidden or is not hidden.

Resistance force is not encountered in a flow direction of the fresh air flow passage 110 with respect to an opening direction and position of the second valve 220, and thus resistance force (driving force) of the motor 310 included in the driver 300 is not necessarily so high.

That is, when an closing operation of the second valve 220 is performed in a reverse direction to fresh air flow, resistance of fresh air needs to be withstood in order to embody the closing operation of the second valve 220, and to this end, the motor 310 needs to have capability for overcoming a reverse operation due to the resistance.

However, according to the present invention, an opening and closing trajectory of the second valve 220 is in a perpendicular direction, but not in a reverse direction to fresh air flow, and thus high resistance force (driving force) of the motor 310 is not required compared with the above case corresponding to the reverse direction.

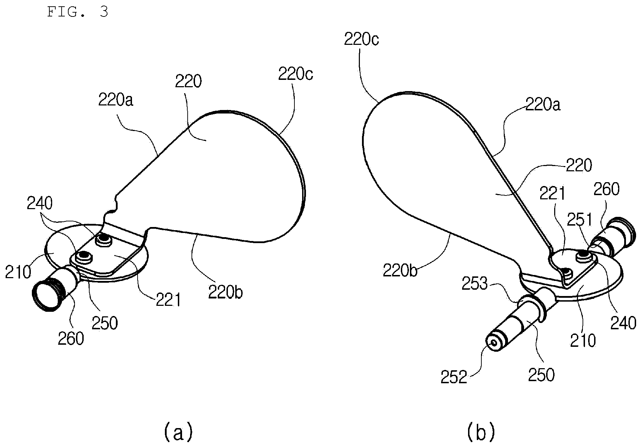

As shown in FIG. 3, the second valve 220 may include a valve plate formed like a cross section of a fan, a water drop, or a balloon, and the extension 221 that is bent and extends from an end of the valve plate in a different direction from an extension direction of the valve plate.

A cross section of the valve plate of the second valve 220 may be formed in such a way that the width of the valve plate is widened from the extension 221 towards an opposite side thereto and then is narrowed again and the valve plate of the second valve 220 may include a first edge portion 220a and a second edge portion 220b that are spaced apart from each towards ends thereof, and a third edge portion 220c that is formed in a curve or an arc which connects the first edge portion 220a and the second edge portion 220b to each other.

Substantially, the valve plate and the extension 221 included in the second valve 220 may be perpendicularly or orthogonally bent to each other or may be bent to be slightly inclined to each other.

The extension 221 may be disposed on the first valve 210, and the extension 221, the first valve 210, and the rotation axis 250 may be connected to each other by the coupling member 240, and thus the first and second valves 210 and 220 may be moved together according to rotation of the rotation axis 250.

The extension of the second valve 220 may be welded or fixed onto the first valve 210 to configure a cross subassembly, and the subassembly may be disposed on the accommodation groove 251, and then may be fixed to the rotation axis by the coupling member 240.

In FIG. 3, reference numeral 252 that is not described is a magnet 252 fixed to an end of the rotation axis 250 and configured to generate magnetic force, a change in magnet force of the magnet, and a hall sensor (not shown) may measure a rotation angle of the rotation axis 250. In addition, reference numeral 253 that is not described is a flange ring 253 that is caught by the housing to determine a position of the rotation axis 250 when the rotation axis 250 is installed in the housing.

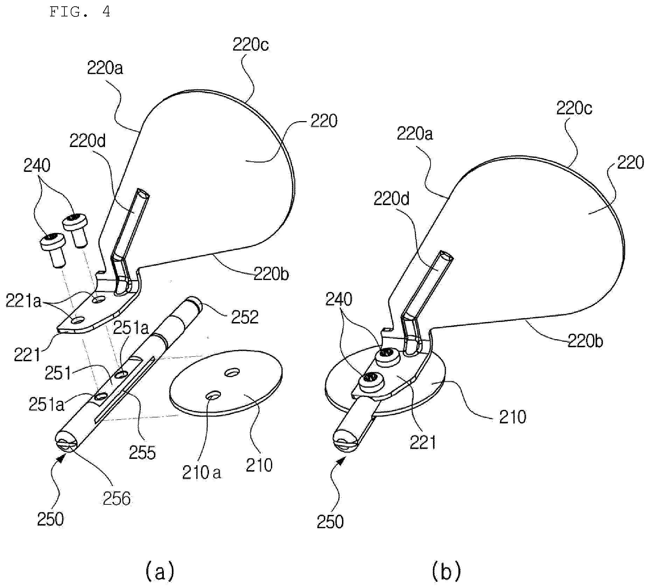

FIGS. 4A and 4B are an exploded perspective view and a coupled perspective view of a valve unit according to a second embodiment.

The accommodation groove 251 configured in a recessed form may be provided on an external surface of the rotation axis 250, and an insertion groove 255 that penetrates an one surface of the rotation axis 250 to an opposite surface thereto and into which the first valve 210 is inserted. The aforementioned first embodiment and the second embodiment may be different from each other in that the first embodiment is configured in such a way that the first valve 210 and the extension 221 of the second valve 220 are simultaneously coupled and fixed to the accommodation groove 251 while being sequentially put therein, but the second embodiment is configured in such a way that the first valve 210 is inserted into the insertion groove 255 and the extension 221 of the second valve 220 is coupled to the accommodation groove 251 by the coupling member 240 in a state which the extension 221 of the second valve 220 is put on the accommodation groove 251.

The insertion groove 255 may be formed in a longitudinal direction of the rotation axis 250, may be provided in the form of a slot that penetrates an intermediate portion between upper and lower ends of the rotation axis, and may have a length corresponding to a diameter of the first valve 210.

The first valve 210 may be formed in a circular flap valve type, the first insertion hole 210a may be provided in a central portion of the first valve 210, the second insertion hole 221a may be provided in the extension 221 of the second valve 220, and the third insertion holes 251a matched with the first and second insertion holes 210a and 221a may be provided in the accommodation groove 251 of the rotation axis 250.

Accordingly, the coupling member 240 may be sequentially inserted into the second insertion hole 221a, the third insertion holes 251a, and the first insertion hole 210a, and thus the rotation axis 250, the first valve 210, and the second valve 220 may be integrally configured as the valve unit 200.

Accordingly, the first valve 210 and the second valve 220 may be simultaneously moved according to rotation of the rotation axis 250.

In a state in which the first and second valves 210 and 220 and the rotation axis 250 are fixed to the coupling member 240, a surface of the first valve 210 may be divided into two parts by the rotation axis 250.

Also, according to the second embodiment, the second valve 220 may be designed in consideration of a shape of the fresh air flow passage 110 because fresh air is introduced in a side direction of a flow direction and intervenes in fluid flow.

A cross section of the valve plate of the second valve 220 may be formed in such a way that the width of the valve plate is widened from the extension 221 towards an opposite side thereto and then is narrowed again and may be configured in the form of a water drop or a fan.

This may be designed to effectively block a cross section of the fresh air flow passage provided in the form of a circle.

A direction in which opposite surfaces of the first valve 210 are disposed and a direction in which opposite surfaces of the second valve 220 may be perpendicular to each other or may be disposed at different angles because a flow direction of exhaust gas and a flow direction of fresh air are different from each other, as described above.

It may be seen that the first valve 210 is configured in a butterfly valve type with respect to the EGR flow passage 120, and the second valve 220 is configured in a slide valve type with respect to the fresh air flow passage 110.

The extension 221 of the second valve 220 may extend in a state in which the extension 221 is bent from a body of the second valve 220, may be disposed in parallel to the first valve 210, and may surface-contact the accommodation groove 251 to be closely adhered thereto.

A strength reinforcement portion 221d configured to reinforce the strength of the bent portion between the extension 221 and the body of the second valve 220 may be provided between the extension 221 and the body of the second valve 220. The strength reinforcement portion 221d may protrude from one surface and may provide strength by which load applied to the bent portion is withstood.

Also, according to the second embodiment, a cross section of a valve plate (body portion) of the second valve 220 may be formed in such a way that the width of the valve plate is widened from the extension 221 towards an opposite side thereto and then is narrowed again and the valve plate of the second valve 220 may include the first edge portion 220a and the second edge portion 220b that are spaced apart from each towards ends thereof, and the third edge portion 220c that is formed in a curve or an arc which connects the first edge portion 220a and the second edge portion 220b to each other.

Substantially, the valve plate and the extension 221 included in the second valve 220 may be perpendicularly or orthogonally bent to each other or may be bent to be slightly inclined to each other.

The extension 221 may be disposed on the first valve 210, and the extension 221, the first valve 210, and the rotation axis 250 may be connected to each other by the coupling member 240, and thus the first and second valves 210 and 220 may be moved together according to rotation of the rotation axis 250.

Reference numeral 252 that is not described is the magnet 252 described in the first embodiment. Reference numeral 256 that is not described is an adjustment groove 256 into which an adjustment member (e.g., a flat-head screwdriver or other rotation adjustment tools) is inserted to adjust a rotation angle of the rotation axis 250 when the rotation axis 250 is installed.

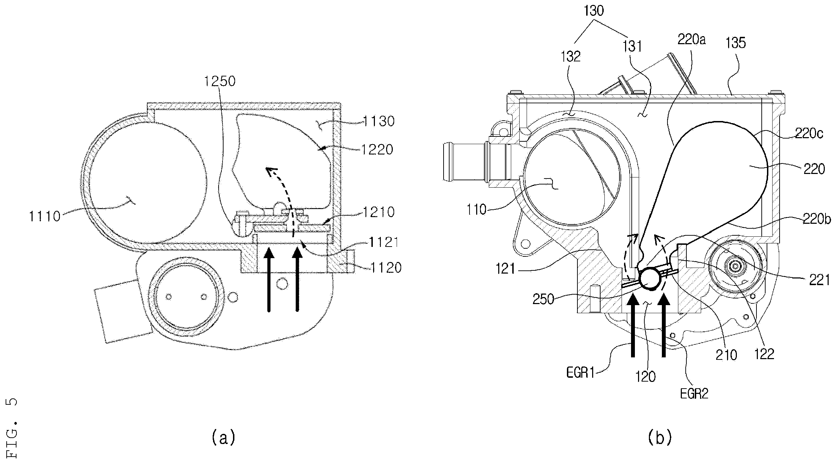

As shown in FIG. 5B, a first guide surface 121 that is inclined in a direction of the fresh air flow passage 110 to smoothly guide EGR gas in a direction towards the fresh air flow passage 110 may be provided in the EGR flow passage 120.

A second guide surface 122 that extends in a moving direction of EGR gas to be positioned in a lower region of the first region 131 of the guide space 130, and allows EGR gas to be moved between the first region 131 and the second region 132 of the guide space 130 if possible, and simultaneously, prevents EGR gas from moving to one side of the first region 131 (which is a right space of FIG. 5B) may be provided at an opposite side to the first guide surface 121.

The height to an upper end of the second guide surface 122 may be higher than the height to a lower end of the first guide surface 121, and thus EGR gas moving along the second guide surface 122 may be smoothly moved to the fresh air flow passage 110 along the first guide surface 121.

Comparing the present invention with the conventional art, a difference therebetween is given in terms of whether a valve for opening and closing an EGR flow passage is a pivot valve type or a butterfly valve type.

As shown in FIG. 5A, EGR gas may be moved to an EGR flow passage 1120 even in a state in which a first valve 1210 closes the EGR flow passage 1120 and thus may pressurize a plate of the first valve 1210 (solid line arrow).

In this case, a rotation axis 1250 that is the center of rotation of the first valve 1210 is spaced apart from one side of the first valve 1210 and is positioned out of the EGR flow passage 1120, and thus entire pressure of EGR gas, which pressurizes the first valve 1210, may tend to open the first valve 1210 as indicated by a dotted line arrow. That is, based on FIG. 4A, moment for opening the first valve 1210 counterclockwise may be applied.

Accordingly, there is a problem in that output of a motor needs to be relatively increased in order to maintain a closed state. As such, when the first valve 1210 is open even by a slight degree in a state in which the first valve 1210 closes the EGR flow passage 1120, an opening direction and a pressurizing direction of EGR gas are aligned with each other and a larger opening degree and inflow rate than an originally controlled opening degree and inflow rate occur, and thus there is a problem in that it is difficult to precisely control an opening degree and inflow rate when the valve is initially open.

However, according to the present invention, as shown in FIG. 5B, the rotation axis 250 that is the center of rotation of the first valve 210 may be disposed on the central portion of the first valve 210. That is, the rotation axis 250 may be positioned in the EGR flow passage 120.

When EGR gas applies force to the first valve 210 in a state in which the first valve 210 closes the EGR flow passage 120, the first valve 210 tends to be rotated clockwise based on FIG. 5B by EGR gas EGR1 that pressurizes a left region of the rotation axis 250 with respect to the rotation axis 250, and the first valve 210 tends to be rotated counterclockwise based on FIG. 4B by EGR gas EGR2 that pressurizes a right region of the rotation axis 250, thereby counterbalancing forces.

Accordingly, compared with the conventional art, a degree by which the first valve 210 tends to be open may be remarkably reduced, and by as much as the reduced degree, the size and capacity of a motor may be reduced and control convenience may be enhanced, compared with the conventional art.

The control convenience of the first valve 210 is enhanced and a degree by which the first valve 210 tends to be open by EGR gas is reduced, and thus it may be possible to precisely control an opening degree and inflow rate when the valve is initially open.

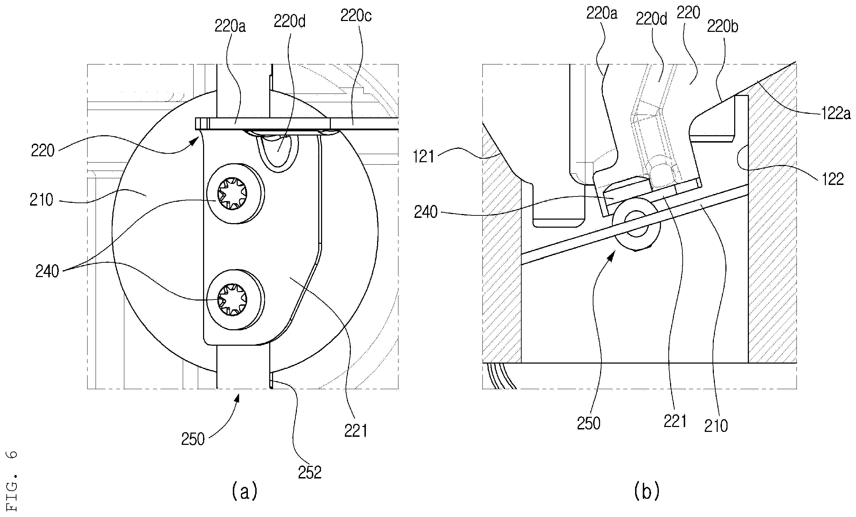

FIGS. 6A and 6B are a partial enlarged view and a partial side surface of the second embodiment.

The advantages described with reference to FIG. 5B are also the same as in the second embodiment.

However, the second embodiment is excellent compared with the first embodiment, and in this regard, a recessed depth of the accommodation groove 251 of the rotation axis 250 is smaller than in the first embodiment, and thus the rotation axis 250 may be more robust with respect to torsion or bending.

Since the accommodation groove 251 and the insertion groove 255 are spaced apart from each other in upwards and downwards direction, the extension 221 of the second valve 220 is disposed on the accommodation groove 251 and the first valve 210 is disposed on the insertion groove 255, and thus, the insertion groove 255 of the rotation axis 250 and the first valve 210 are temporarily assembled with each other, the accommodation groove 251 of the rotation axis 250 and the extension 221 of the second valve 220 are closely adhered to each other, and then, assembly is performed using the coupling member 240, and accordingly, assembly/arrangement may be independently performed, thereby preventing influence and interference between the first valve 210 and the second valve 220.

A lower end of the coupling member 240 may be slightly exposed to an outer circumference of the rotation axis 250 and is welded to finish coupling, and according to the second embodiment, the insertion groove 255 may be closely adhered to upper and lower surfaces of the center of the first valve 210, and thus influence (e.g., deformation) due to heat during welding may be advantageously prevented.

Hereinafter, an operation according to the present invention will be described with reference to the accompanying drawings. The operation is based on the first embodiment, but is the same as in the second embodiment.

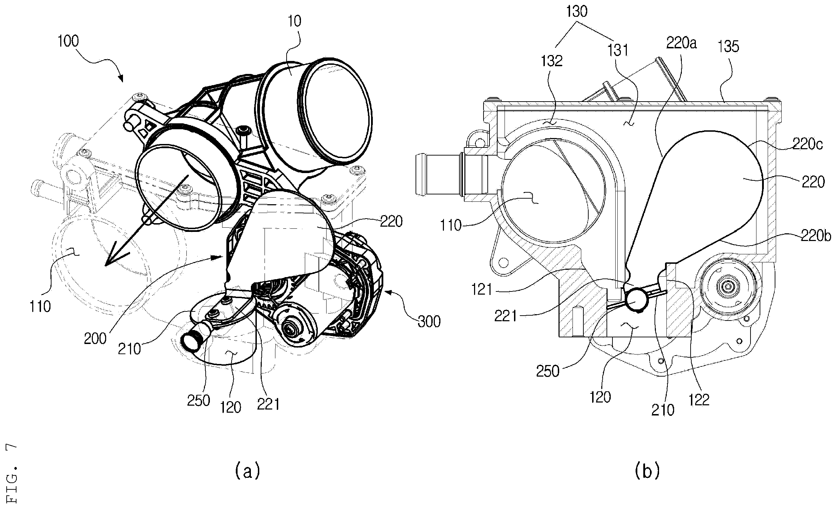

As shown in FIG. 7, in a state in which the first valve 210 completely closes an inlet 121 of the EGR flow passage 120, the second valve 220 may be positioned in the guide space 130 and may be spaced apart from the fresh air flow passage 110 by a predetermined interval.

In a state in which the first valve 210 is completely closed, the first valve 210 may be inclined with respect to a proceeding direction of the EGR flow passage 120 in order to prevent operation failure due to a phenomenon in which the first valve 210 is inserted into the EGR flow passage 120.

In this case, exhaust gas is not introduced into the fresh air flow passage 110, and the fresh air flow passage 110 does not intervene or interfere by the second valve 220, and thus fresh air introduced along the fresh air flow passage 110 may be maintained in a maximum amount.

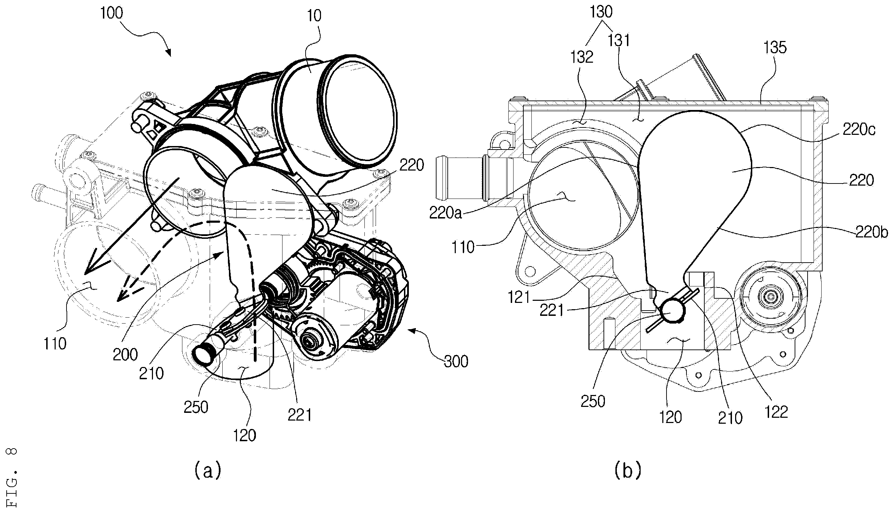

As shown in FIG. 8, when the first valve 210 is gradually open in order to introduce exhaust gas to an engine, the EGR flow passage 120 may be accordingly open, and the exhaust gas may be transmitted through the guide space 130 and may then be introduced to the fresh air flow passage 110.

Simultaneously, the second valve 220 may also approach the fresh air flow passage 110 while being rotated with the first valve 210.

As long as an internal space of the fresh air flow passage 110 does not interfere with the second valve 220, a change in the state in which fresh air is introduced, which occurs in FIG. 7, may not occur.

That is, only exhaust gas may be added while fresh air is continuously introduced in a maximum amount, and this state may be maintained until the first edge portion 220a of the second valve 220 is completely aligned with an outer boundary line of the fresh air flow passage 110 of the first edge portion 220a.

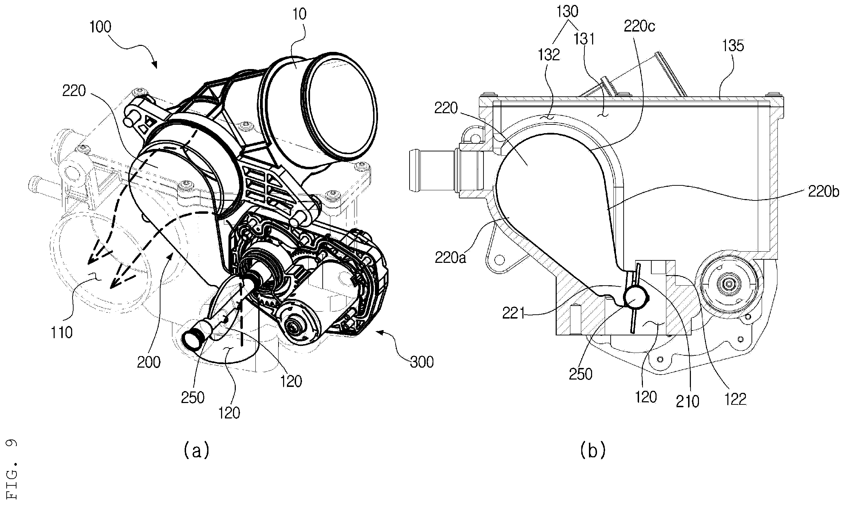

As shown in FIG. 9, when a rotation angle of the first valve 210 is increased in order to increase an inflow rate of exhaust gas compared with the state of FIG. 7, the first valve 210 may become close to an approximately upright state compared with the closed state (compared with FIG. 7).

Accordingly, the amount of exhaust gas transmitted through the inlet 121 of the EGR flow passage 120 may be close to a maximum state or may be a maximum state.

As an opening degree of the first valve 210 is increased, the second valve 220 may enter an internal portion of the fresh air flow passage 110, and the second valve 220 may hide an entire or partial portion of a cross section of the fresh air flow passage 110, thereby reducing flow transmitted through the fresh air flow passage 110.

As shown in FIG. 9, when the first valve 210 is positioned upright, exhaust gas may have a maximum inflow rate, and fresh air transmitted through the fresh air flow passage 110 may be in a minimum amount.

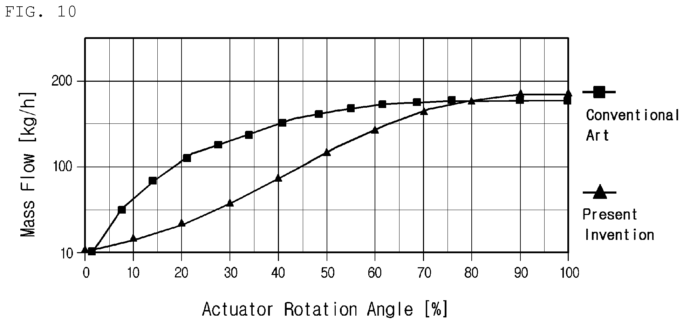

FIG. 10 is a graph showing a change in an inflow rate of fresh air and exhaust gas according to the states of FIGS. 7 to 9 and shows comparison between the conventional art and the present invention.

In FIG. 10, the X axis is a rotation angle ratio of the first valve 210, which is a ratio of an actuator rotation angle. 0% refers to complete closing and 100% refers to complete opening.

The Y axis refers to mass flow of introduced EGR gas.

In the conventional art, EGR gas is remarkably increased in a section of 0 to 30 %, which is initial opening. This means that it is difficult to control flow of EGR gas in the initial opening section. As described, this is because, when the first valve is configured as a pivot type valve, entire EGR gas tends to open the first valve, and in this case, when the first valve is open, entire EGR gas is introduced into an initially open gap to increase an opening degree compared with the originally controlled opening, and thus an inflow rate of EGR gas is rapidly increased when the valve is initially open.

However, according to the present invention, in a state in which the EGR flow passage is closed, even if EGR gas pressurizes the first valve, forces due to the pressurizing are counterbalanced based on the rotation axis, and thus adverse affection of the applied force may be reduced when the valve is initially open.

Accordingly, an initial opening degree may be appropriate for originally controlled intention, and accordingly, the initial flow may be stably increased in a section of 0 to 30 %, which is initial opening, which is seen from a plot having a linear tendency.

According to the present invention, a valve for opening and closing an EGR flow passage and a valve for adjusting an area of a fresh air flow passage may be connected to each other by one power transfer component rater than being connected by separate power transfer components such as a cam or a gear, thereby enhancing operational responsibility.

According to the present invention, the first valve for opening and closing the EGR flow passage is configured in a butterfly valve type, but not in a pivot valve type, and thus the rotation axis may be positioned in the EGR flow passage, and accordingly, the tendency in which the first valve is open may be counterbalanced by force of EGR gas applied to the first valve in a side direction of the rotation axis, and as small actuator as possible may be used.

The tendency in which the first valve is open may be reduced, and thus an opening degree and an initial inflow rate when the first valve is initially open may be more effectively controlled.

According to the present invention, the first valve may be inserted into the insertion groove provided on the rotation axis and the second valve may be disposed on an accommodation groove formed on an external surface of the rotation axis, and thus the first and second valves may be independently positioned, thereby minimizing influence therebetween.

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. An exhaust gas recirculation (EGR) valve for a vehicle comprising:
a fresh air flow passage (110);
an EGR flow passage (120) connected to the fresh air flow passage (110);
a valve unit (200) configured to open or close the EGR flow passage (120) and to selectively block a portion of the fresh airflow passage (110) according to an opened or closed state of the EGR flow passage (120),
wherein the valve unit (200) includes:
a first valve (210) configured to open or close the EGR flow passage (120); and
a second valve (220) disposed at one side of the first valve (210) and disposed at a different angle from the first valve (210), the second valve (220) provided to selectively interfere or not interfere with fluid flow of fresh air in the fresh air flow passage (110) while being moved with the first valve (210),
wherein the first valve (210) is provided in the form of a butterfly valve with respect to the EGR flow passage (120),
wherein the exhaust gas recirculation for a vehicle comprise:
a rotation axle (250) disposed on a central portion of the EGR flow passage (120),
wherein the first valve (210) and second valve (220) are fixed to the rotation axle (250) such that the first valve (210) and the second valve (220) are adapted to move simultaneously as the rotation axle (250) rotates, and
**characterized in that** the second valve (220) is disposed to be perpendicular or inclined with respect to a proceeding direction of the fresh air flow passage (110); and
wherein the rotation axle (250) is arranged in parallel to the proceeding direction of the fresh air flow passage (110).

2. The EGR valve for a vehicle of claim 1,
wherein the rotation axle (250) is disposed on a central portion of the first valve (210).

3. The EGR valve for a vehicle of claim 1, wherein, when the first valve (210) completely closes the EGR flow passage (120), the first valve (210) is inclined with respect to a longitudinal direction of the EGR flow passage (120).

4. The EGR valve for a vehicle of claim 1, wherein the rotation axle (250) includes an accommodation groove (251) on which the first valve (210) is fixedly accommodated;
wherein the first valve (210) is disposed on the accommodation groove (251); and
wherein the extension (221) connecting the first valve (210) and the second valve (220) is fixed to the first valve (210) and the rotation axle (250).

5. The EGR valve for a vehicle of claim 4, wherein the extension (221) is bent at an end of the second valve and extends in a different direction of an extension direction of the second valve.

6. The EGR valve for a vehicle of claim 1, wherein the second valve (220) has an area that is widened in an opposite direction to a position adjacent to the first valve (210) and has a rounded endmost portion.

7. The EGR valve for a vehicle of claim 1, wherein a first guide surface (121) is provided in an inclined form between the fresh air flow passage (110) and the EGR flow passage (120);
wherein a second guide surface (122) is provided at an opposite side to the first guide surface (121) in a longitudinal direction of the EGR flow passage (120); and
wherein a height to an upper end of the second guide surface (122) is higher than a height to a lower end of the first guide surface (121).

8. The EGR valve for a vehicle of claim 1, further comprising:
an insertion groove (255) that is formed to penetrate an outer circumference of the rotation axle (250) and into which the first valve (210) is inserted; and
an accommodation groove (251) that is formed to be stepped by exploding or removing a portion of the outer circumference of the rotation axle (250) and on which the extension (221) of the second valve (220) is disposed,
wherein a first insertion hole (210a) is formed in the first valve (210);
wherein a second insertion hole (221a) is formed in the extension (221) of the second valve (220);
wherein a third insertion hole (251a) is formed in the rotation axle (250); and
wherein a coupling member (240) is inserted into the second insertion hole (221a), the third insertion hole (251a), and the first insertion hole (210a), sequentially, and fixes the first (210) and second valves (220) and the rotation axle (250).

9. The EGR valve for a vehicle of claim 1, wherein the second valve (220) further includes a strength reinforcement portion (220d) configured to reinforce a bent portion between an extension (221) and a valve body portion of the second valve (220).

## Patentansprüche

1. Abgasrückführungs (*exhaust gas recirculation*; EGR)-Ventil für ein Fahrzeug umfassend:
einen Frischluftströmungsdurchgang (110);
einen EGR-Strömungsdurchgang (120), der mit dem Frischluftströmungsdurchgang (110) verbunden ist;
eine Ventileinheit (200), die dazu konfiguriert ist, den EGR-Strömungsdurchgang (120) zu öffnen oder zu schließen und gemäß einem geöffneten oder geschlossenen Zustand des EGR-Strömungsdurchgangs (120) einen Abschnitt des Frischluftströmungsdurchgangs (110) selektiv zu blockieren,
wobei die Ventileinheit (200) umfasst:
ein erstes Ventil (210), das dazu konfiguriert ist, den EGR-Strömungsdurchgang (120) zu öffnen oder zu schließen; und
ein zweites Ventil (220), das an einer Seite des ersten Ventils (210) angeordnet und in einem unterschiedlichen Winkel von dem ersten Ventil (210) angeordnet ist, wobei das zweite Ventil (220) dazu vorgesehen ist, selektiv eine Fluidströmung von Frischluft in dem Frischluftströmungsdurchgang (110) zu beeinflussen oder nicht zu beeinflussen, während es mit dem ersten Ventil (210) bewegt wird,
wobei das erste Ventil (210) in der Form eines Schmetterlingsventils in Bezug auf den EGR-Strömungsdurchgang (120) vorgesehen ist,
wobei die Abgasrückführung für ein Fahrzeug umfasst:
eine Drehachse (250), die an einem zentralen Abschnitt des EGR-Strömungsdurchgangs (120) angeordnet ist,
wobei das erste Ventil (210) und das zweite Ventil (220) an der Drehachse (250) fixiert sind, so dass das erste Ventil (210) und das zweite Ventil (220) daran angepasst sind, sich gleichzeitig zu bewegen, wenn sich die Drehachse (250) dreht, und
**dadurch gekennzeichnet, dass** das zweite Ventil (220) dazu angeordnet ist, in Bezug auf eine Verlaufsrichtung des Frischluftströmungsdurchgangs (110) senkrecht oder geneigt zu sein; und
wobei die Drehachse (250) parallel zu der Verlaufsrichtung des Frischluftströmungsdurchgangs (110) angeordnet ist.

2. EGR-Ventil für ein Fahrzeug nach Anspruch 1,
wobei die Drehachse (250) an einem zentralen Abschnitt des ersten Venils (210) angeordnet ist.

3. EGR-Ventil für ein Fahrzeug nach Anspruch 1, wobei, wenn das erste Ventil (210) den EGR-Strömungsdurchgang (120) vollständig schließt, das erste Ventil (210) in Bezug auf eine Längsrichtung des EGR-Strömungsdurchgangs (120) geneigt ist.

4. EGR-Ventil für ein Fahrzeug nach Anspruch 1, wobei die Drehachse (250) eine Aufnahmenut (251) umfasst, an der das erste Ventil (210) fixiert aufgenommen ist;
wobei das erste Ventil (210) an der Aufnahmenut (251) angeordnet ist; und
wobei die Erstreckung (221), die das erste Ventil (210) und das zweite Ventil (220) verbindet, an dem ersten Ventil (210) und der Drehachse (250) fixiert ist.

5. EGR-Ventil für ein Fahrzeug nach Anspruch 4, wobei die Erstreckung (221) an einem Ende des zweiten Ventils gebogen ist und sich in einer unterschiedlichen Richtung einer Erstreckungsrichtung des zweiten Ventils erstreckt.

6. EGR-Ventil für ein Fahrzeug nach Anspruch 1, wobei das zweite Ventil (220) einen Bereich aufweist, der in einer entgegengesetzten Richtung zu einer Position angrenzend an das erste Ventil (210) erweitert ist und ganz am Ende einen abgerundeten Abschnitt aufweist.

7. EGR-Ventil für ein Fahrzeug nach Anspruch 1, wobei eine erste Führungsoberfläche (121) in einer geneigten Form zwischen dem Frischluftströmungsdurchgang (110) und dem EGR-Strömungsdurchgang (120) vorgesehen ist;
wobei eine zweite Führungsoberfläche (122) an einer der ersten Führungsoberfläche (121) gegenüberliegenden Seite in einer Längsrichtung des EGR-Strömungsdurchgangs (120) vorgesehen ist; und
wobei eine Höhe zu einem oberen Ende der zweiten Führungsoberfläche (122) höher als eine Höhe zu einem unteren Ende der ersten Führungsoberfläche (121) ist.

8. EGR-Ventil für ein Fahrzeug nach Anspruch 1, ferner umfassend:
eine Einfügenut (255), die dazu gebildet ist, einen Außenumfang der Drehachse (250) zu durchdringen und in die das erste Ventil (210) eingefügt ist; und
eine Aufnahmenut (251), die dazu gebildet ist, durch Explodieren oder Entfernen eines Abschnitts des Außenumfangs der Drehachse (250) gestuft zu sein, und an der die Erstreckung (221) des zweiten Ventils (220) angeordnet ist,
wobei ein erstes Einfügeloch (210a) in dem ersten Ventil (210) gebildet ist;
wobei ein zweites Einfügeloch (221a) in der Erstreckung (221) des zweiten Ventils (220) gebildet ist;
wobei ein drittes Einfügeloch (251a) in der Drehachse (250) gebildet ist; und
wobei ein Kopplungselement (240) nacheinander in das zweite Einfügeloch (221a), das dritte Einfügeloch (251a) und das erste Einfügeloch (210a) eingefügt wird und das erste (210) und zweite Ventil (220) und die Drehachse (250) fixiert.

9. EGR-Ventil für ein Fahrzeug nach Anspruch 1, wobei das zweite Ventil (220) ferner einen Festigkeitsverstärkungsabschnitt (220d) umfasst, der dazu konfiguriert ist, einen gebogenen Abschnitt zwischen einer Erstreckung (221) und einem Ventilkörperabschnitt des zweiten Ventils (220) zu verstärken.

## Revendications

1. Soupape de recyclage des gaz d'échappement (RGE) pour un véhicule, comprenant :
un passage d'écoulement d'air frais (110),
un passage d'écoulement de RGE (120) relié au passage d'écoulement d'air frais (110),
une unité de soupape (200) configurée pour ouvrir ou fermer le passage d'écoulement de RGE (120) et pour bloquer de manière sélective une partie du passage d'écoulement d'air frais (110) selon un état ouvert ou fermé du passage d'écoulement de RGE (120),
dans laquelle l'unité de soupape (200) comporte :
une première soupape (210) configurée pour ouvrir ou fermer le passage d'écoulement de RGE (120), et
une seconde soupape (220) disposée sur un côté de la première soupape (210) et disposée à un angle différent par rapport à la première soupape (210), la seconde soupape (220) étant prévue pour interférer de manière sélective ou ne pas interférer avec l'écoulement de fluide d'air frais dans le passage d'écoulement d'air frais (110) tout en étant déplacée avec la première soupape (210),
dans laquelle la première soupape (210) est prévue sous la forme d'une soupape papillon par rapport au passage d'écoulement de RGE (120),
dans laquelle le recyclage des gaz d'échappement pour un véhicule comprend :
un arbre de rotation (250) disposé sur une partie centrale du passage d'écoulement de RGE (120),
dans laquelle la première soupape (210) et la seconde soupape (220) sont fixées à l'arbre de rotation (250) de telle sorte que la première soupape (210) et la seconde soupape (220) sont adaptées à se déplacer simultanément lorsque l'arbre de rotation (250) tourne, et
**caractérisée en ce que** la seconde soupape (220) est disposée pour être perpendiculaire ou inclinée par rapport à une direction de déplacement du passage d'écoulement d'air frais (110), et
dans laquelle l'arbre de rotation (250) est agencé parallèlement à la direction de déplacement du passage d'écoulement d'air frais (110).

2. Soupape RGE pour véhicule selon la revendication 1,
dans laquelle l'arbre de rotation (250) est disposé sur une partie centrale de la première soupape (210).

3. Soupape RGE pour véhicule selon la revendication 1, dans laquelle, lorsque la première soupape (210) ferme complètement le passage d'écoulement de RGE (120), la première soupape (210) est inclinée par rapport à une direction longitudinale du passage d'écoulement de RGE (120).

4. Soupape RGE pour véhicule selon la revendication 1, dans laquelle l'arbre de rotation (250) comporte une rainure de logement (251) sur laquelle la première soupape (210) est logée de manière fixe,
dans laquelle la première soupape (210) est disposée sur la rainure de logement (251), et
dans laquelle l'extension (221) reliant la première soupape (210) et la seconde soupape (220) est fixée à la première soupape (210) et l'arbre de rotation (250).

5. Soupape RGE pour véhicule selon la revendication 4, dans laquelle l'extension (221) est courbée à une extrémité de la seconde soupape et s'étend dans une direction différente d'une direction d'extension de la seconde soupape.

6. Soupape RGE pour véhicule selon la revendication 1, dans laquelle la seconde soupape (220) présente une zone qui est élargie dans une direction opposée à une position adjacente à la première soupape (210) et présente une partie la plus extrême arrondie.

7. Soupape RGE pour véhicule selon la revendication 1, dans laquelle une première surface de guidage (121) est prévue dans une forme inclinée entre le passage d'écoulement d'air frais (110) et le passage d'écoulement de RGE (120),
dans laquelle une seconde surface de guidage (122) est prévue sur un côté opposé à la première surface de guidage (121) dans une direction longitudinale du passage d'écoulement de RGE (120), et
dans laquelle une hauteur jusqu'à une extrémité supérieure de la seconde surface de guidage (122) est plus élevée qu'une hauteur jusqu'à une extrémité inférieure de la première surface de guidage (121).

8. Soupape RGE pour véhicule selon la revendication 1, comprenant en outre :
une rainure d'insertion (225) qui est formée pour pénétrer une circonférence extérieure de l'arbre de rotation (250) et dans laquelle la première soupape (210) est insérée, et
une rainure de logement (251) qui est formée pour être échelonnée en explosant ou en enlevant une partie de la circonférence extérieure de l'arbre de rotation (250) et sur laquelle l'extension (221) de la seconde soupape (220) est disposée,
dans laquelle un premier orifice d'insertion (210a) est formé dans la première soupape (210),
dans laquelle un deuxième orifice d'insertion (221a) est formé dans l'extension (221) de la seconde soupape (220),
dans laquelle un troisième orifice d'insertion (251a) est formé dans l'arbre de rotation (250), et
dans laquelle un élément de couplage (240) est inséré dans le deuxième orifice d'insertion (221a), le troisième orifice d'insertion (251a) et le premier orifice d'insertion (210a), de manière séquentielle, et fixe les première (210) et seconde (220) soupapes et l'arbre de rotation (250).

9. Soupape RGE pour véhicule selon la revendication 1, dans laquelle la seconde soupape (220) comporte en outre une partie de renforcement de résistance (220d) configurée pour renforcer une partie courbée entre une extension (221) et une partie de corps de soupape de la seconde soupape (220).
